Europäisches Patentamt

European Patent Office

Office européen des brevets

(19)

(11) Publication number: **0 220 380**
**A2**

# EUROPEAN PATENT APPLICATION

(12)

(21) Application number: **86109144.5**

(22) Date of filing: **04.07.86**

(51) Int. Cl.⁴: **G 06 K 17/00**

(30) Priority: **05.07.85 US 752102**

(43) Date of publication of application: **06.05.87**
**Bulletin 87/19**

(84) Designated Contracting States: **DE FR GB**

(71) Applicant: **IRVING N. ARNOLD ASSOCIATES, LTD.,**
**14 Ronson Drive, Rexdale Ontario M9W 1B2 (CA)**

(72) Inventor: **Uslu, Altan, RR3 Carp, Koailo Ontario (CA)**
Inventor: **Arnold, Irving N., 212 Forest Hills Road,**
**Toronto Ontario (CA)**
Inventor: **Gomes-Simoes, Jose, 3260 Brandon Gate**
**Drive, Mississauga Ontario (CA)**

(74) Representative: **Ebbinghaus, Dieter et al, v. FÜNER,**
**EBBINGHAUS, FINCK Patentanwälte European Patent**
**Attorneys Mariahilfplatz 2 & 3, D-8000 München 90 (DE)**

(54) **Data storage and retrieval apparatus for controlling systems.**

(57) A system for writing data into or reading data from an alterable data storage carrier is described as embodied in an article (garment) transport system. A passive (unenergized) data carrier is associated with a particular article carrier and as it is transported into a work station, a sensing means makes contact with the data carrier, energizes it and writes into it or reads from it data relating to the article being carried or relating to the work station at which the sensing means is located. A central processing unit controls the contacting of the sensing means with the data carrier and the entry or retrieval of data therefrom. The data entered into or received from the data carrier may be used to compile statistics relating to the travel of that particular article carrier, relating to the processing status of the article being carried, etc.

IRVING N. ARNOLD ASSOCIATES, LTD.          EPAB-34017.4
                                           July 4, 1986

### DATA STORAGE AND RETRIEVAL APPARATUS FOR CONTROLLING SYSTEMS

## BACKGROUND OF THE INVENTION

### A. FIELD OF THE INVENTION

This invention relates to apparatus for writing data into or reading data from an alterable data storage means. In particular, it relates to such apparatus as used with systems to be controlled such as systems for conveying articles like clothes from one point to another.

### B. PRIOR ART

Systems are known and patents have been granted for article transport systems wherein articles such as garments are transported around a main loop to a succession of work stations for processing, inspecting or other operations on the garments. Some systems, such as the one shown in U.S. Patent 3,592,141 permits each individual worker at an operating station to determine the dispatching of a just-processed article to the next processing step. Another system, known as the "Ideal" system requires a microprocessor for each station, has numerous worker control buttons, and has rather stringent requirements for the spatial positioning of the various work stations involved.

A centrally-controlled system involving a supervisor or dispatcher at a central computer (CPU) for determining the destinations of articles which are to be, or have just been processed, is described and claimed in U.S.

Patent application Serial No. 656,933, filed October 2, 1984 of John F. Plattner, Carl W. Hamelin and Irving N. Arnold. The title of the application is "Computer Dispatched Article Conveying System".

Another system involving computers and utilizing so-called optical "bar codes" associated with each roller-hanger for the garments is also known under the trademark "INVESMOVE". The use of bar codes usually involves a requirement that there be relative movement between the code itself and the optical character recognition scanners used with the code. There may not be an opportunity in such systems to verify a reading by re-scanning because the garment carrier may only move once past the scanner. Lack of opportunity to re-scan the code may give rise to errors in the read-out data.

It is also a characteristic of such systems that the visual data in the bar code is immutable. Moreover, bar code systems are relatively expensive, especially if there is to be a scanner at each work station.

It is therefore among the objects of the present invention to provide a data write-in and read-out system for use with the articles with which data carriers are associated, especially in article transport systems, which:

1. Is less expensive than many types of such systems.

2. Enables simple verification of read-out data from the data carrier associated with the article without requiring extra movement of the article.

3. Enables data on the data carrier associated with the article to be changed.

4. Enables interaction between data on the data carrier associated with the article and a data reading or writing means.

5. Enables the cumulation of data on a given data carrier as that article is subjected to a sequence of processing operations.

6. Enables the gathering, processing, display and interpretation of data read from the data carrier associated with the article.

SUMMARY OF THE INVENTION
A data storage and retrieval system which employs (1) a normally inactivated and alterable data carrier adapted to be associated with a particular article into which data may be written and read from when activated and (2) independent means which can be brought into close proximity to the data carrier and which can activate it whereupon it can write-in or read information therefrom.

BRIEF DESCRIPTION OF THE DRAWINGS

Fig. 1 is a perspective view of an overall system into which the present invention may be incorporated;

Fig. 2 is an enlarged perspective view of the elevator output section at a work station showing the stationary read-write means that interacts with the alterable data in a data carrier associated with an article carrier;

Fig. 3 is an enlarged perspective view of the read-write means in accordance with the present invention;

Fig. 4 is a partly sectional view taken along the sight line 4-4 in the direction indicated in Fig. 3;

Fig. 4A is a side elevation view, partly sectional, of a detail of a portion of the apparatus shown in Fig. 4;

Fig. 5 is an exploded perspective view of a portion of the article carrier with which a data carrier is associated;

Fig. 6 is a perspective view of the data carrier shown in Fig. 5 taken from the other side thereof;

Fig. 6A is a partly schematic diagram of the constituents of the data carrier;

Fig. 7 is a perspective view of an alternative form of part of the data carrier that may be used in the present invention;

Fig. 8 is a side-elevation view, partly sectional, showing an alternate form of the read-write apparatus that may be used with the present invention;

Fig. 9 is an enlarged perspective view of a detail of the overall system shown in Fig. 1;

Fig. 10 is a schematic diagram of the interface circuit coupled between the read-write means and a central processing unit; and

Fig. 11 is a schematic diagram of the electronic portion of the read-write apparatus that interacts with the data carrier associated with the article.

DETAILED DESCRIPTION OF THE DRAWINGS

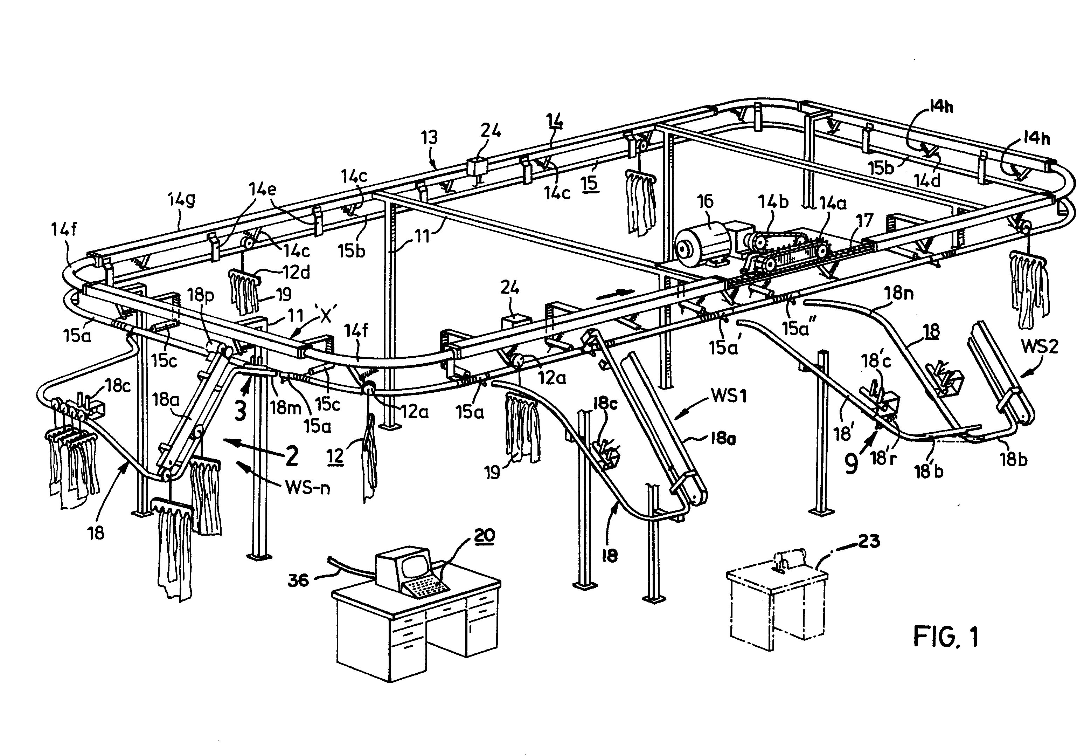

Overall System - Figs. 1, 3-5

The present invention involves the monitoring of the processing of a garment or other article as it is carried from one work station to another by means of writing in and/or reading out information in a data carrier associated with a garment carrier. At selected work stations where operations are performed on the garment or article, there are located devices coupled to a central processing unit which contact the data carrier, activate it, and write in or read out data from it for display, compiling statistics and data as to the characteristics of the garments on the carrier, etc. The present invention may be used in conjunction with many types of garment transport systems and for other applications as well. It will be explained, however, in terms of one typical environment, a garment transport system of the type described and shown in U.S. patent application Serial No. 656,933 of Plattner et al mentioned above.

Referring to Fig. 1, there is shown a garment transport system indicated generally at the numeral 15. It comprises an upper track or rail 14 and a lower track or rail 15 which may be generally tubular. Both tracks are arranged in a generally over-rectangular configuration, although other shapes are equally possible. The tracks are spaced from one another by appropriate spacing elements 14e and supported by horizontal and vertical structural elements 11. In the upper track there is a continuously moving garment transport chain 17 driven by a drive motor 16 through the intermediary of several other sprocket chains shown generally at 14a and 14b. The particular construction and arrangement of the chains 14a and 14b may be conventional and is of small importance relative to the system as a whole.

Suspended from the chain 17 at predetermined intervals are a plurality of "pushers" 14c, each comprising a vertical portion and a horizontal pin 14d which extends uniformly on both sides of an aperture in the vertical portion. The vertical portion has a spring 14h attached between its lower end and to an eyelet-shaped member attached to chain 17. This spring enables the vertical portion to ride over the tops of any rollers in the event of a jam-up of rollers and brings it back to its normal forward stance when the jam breaks. The pin makes contact with the back upper edges of the roller portion 12a of a garment carrier 12 nudging it forward in the direction of the movement of the chain.

The roller portion 12a of the garment carrier 12 rolls on the lower rail 15 about an axle comprised of a horizontal, bent-over rod section 12b of a vertical rod 12c. The rod is joined to a lower, single or multi-garment carrying hanger or clamping means 12d constructed to releasably hold one or more individual articles or garments 19, or parts thereof.

As shown in Fig. 1, the chain 14a is moving in a generally counter-clockwise direction. Some of the pushers 14c may not be engaging carriers 12 at times.

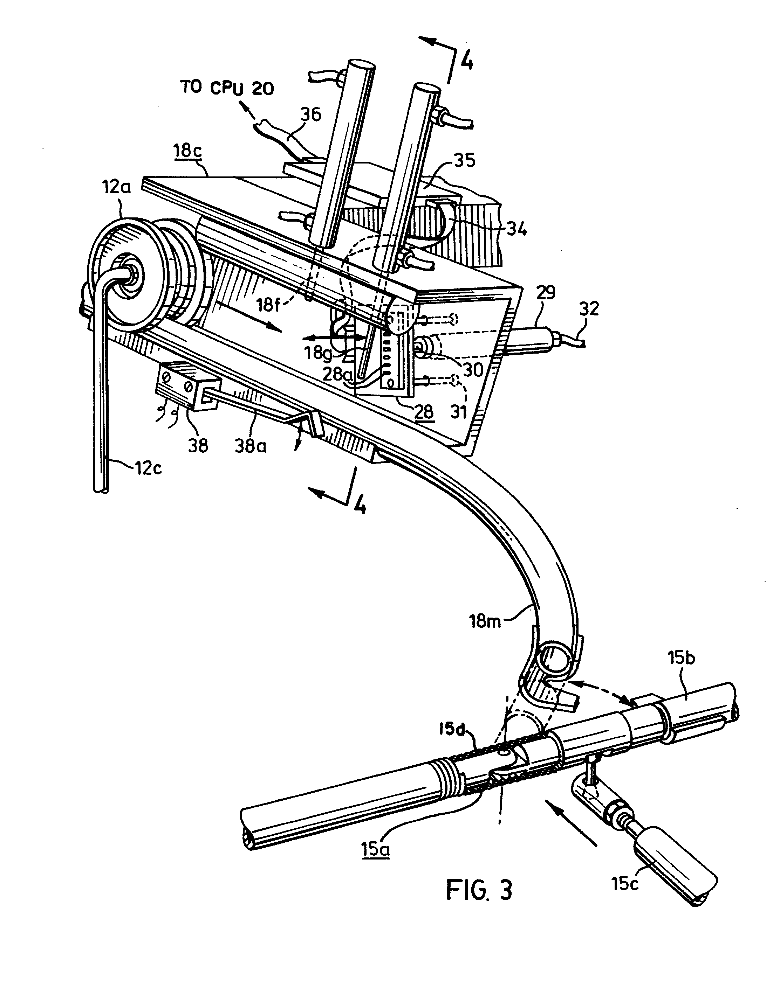

The lower tubular rail or track 15 comprises a number of non-movable sections such as sections 15b as well as a number of movable sections 15a. As shown in Fig. 3, the movable sections 15a comprise portions that are adapted to swing in a horizontal plane when a piston-air cylinder assembly 15c is actuated. The portion 15a will be termed a "diverting arm" and when its associated pneumatic cylinder 15c is actuated, it operates either to enable an article to be transferred onto the lower rail 15 (as shown in phantom lines in Fig. 3) or from the lower rail to a work station. When cylinder 15c is not

-8-

actuated, a spring coupling surrounding its pivoting joint restores the diverting arm to its normal, axial orientation in line with sections 15b.

The actuation of the pneumatic cylinder 15c and the timing of the hydraulic pulse which operates it is under the centralized control of a central processing unit (not shown). As shown and explained in the Plattner application, signals to all of the diversion arms and to the various switches and valves go to and from said processing unit via so-called "quad boxes" 24 shown mounted on the interior side of the upper track.

There are a number of work stations WS1, WS2...WSn arranged outwardly of tracks 14 and 15, each one being equipped with a garment processing machine such as a sewing machine 23 drawn in phantom lines in Fig. 1. A worker sits at each work station and performs an operation on the clothes of each carrier diverted to her work station. Garments coming into a work station do so by spur rails communicating with the lower rail. Thus, rails 18 and 18' form the inlet rails onto which the garment carriers are shifted when the diverting arms 15a or 15a' are actuated.

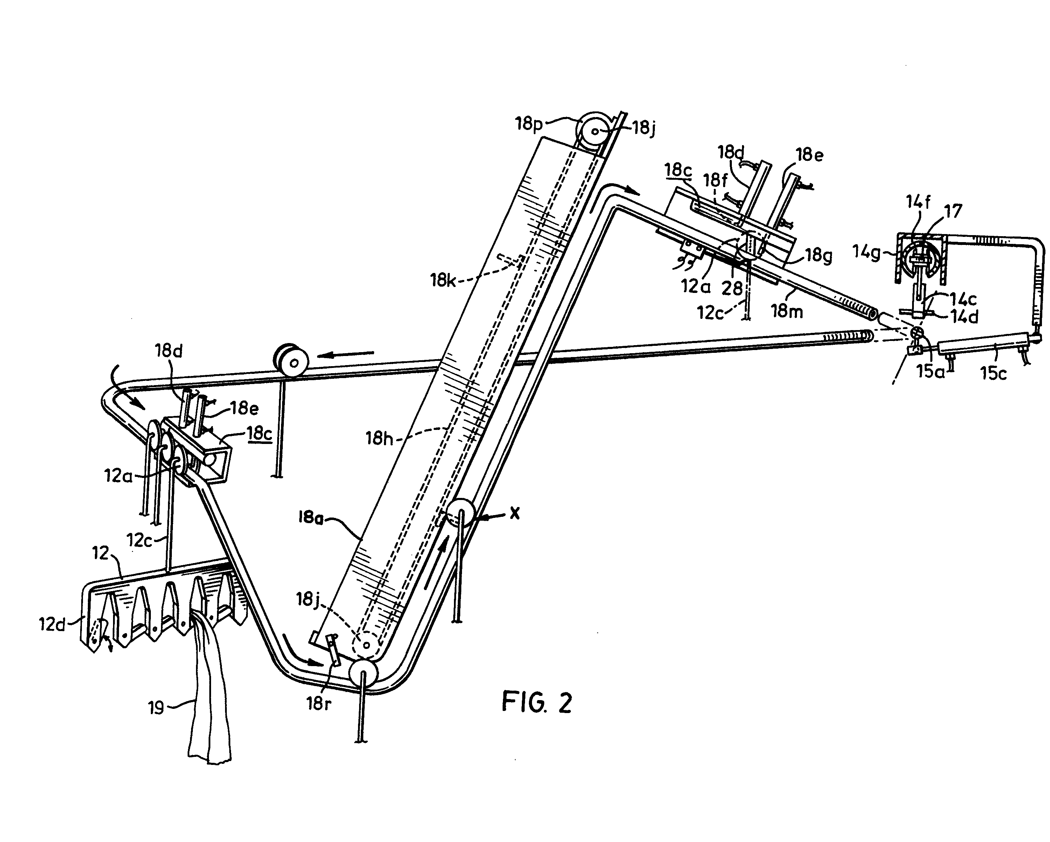

When an appropriate diversion arm 15a is actuated, a roller-hanger on the lower track will roll via the actuated diversion arm onto an inlet rail 18 or 18' and downward by gravity until it is stopped by the lowering of the forward pin 18g of a pneumatically-operated retain-release subassembly 18c (Fig. 2) that is also controlled by the central processing unit via the quad boxes 24. Subassembly 18c is mounted on a C-channel section and its pins 18f and 18g work oppositely. Subassembly 18c permits storage of incoming garment carriers 12 above subassembly 18c on the incoming rail 18 to the work station. One roller-hanger at a time is usually released by the worker at a work station by pressing a pushbutton. The pushbutton simultaneously causes the belt 18h of the associated elevator 18a to pick up a roller-carrier having clothing articles which have just been processed and carry that carrier into position on the outfeed line 18m for transfer back to the lower rail 15.

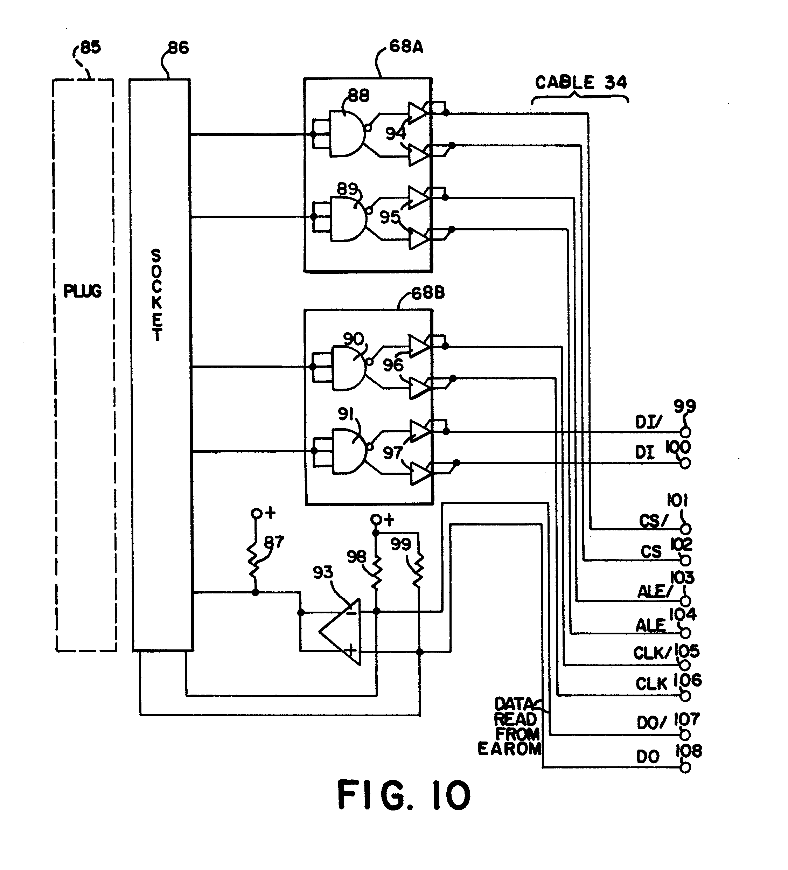

In some cases, as may be seen by reference to work station WS2 of Fig. 1, there is an additional infeed line 18' to the spur. It also has its own associated retain-release subassembly 18'c. By using two (or more) infeed lines, it is possible to have different styles of garments, or parts of garments respectively disposed on the different infeed rails although they are ultimately going to the same work station for possibly the same processing step. As shown in more detail in Fig. 9, one end of the additional infeed line 18' is journalled into a tubular collar for limited rotation therein. It has a vertical rod portion 18's attached to it as shown in Fig. 9 to whose lower

-10-

end one end of a spring 18'r is fastened. The other end of the spring is fastened to a pin mounted in a bracket 18'd to which the retain-release subassembly 18'c is mounted. When a single roller-carrier 12 is released by the lowering of the back pin and raising of the front pin of subassembly 18'c, the carrier will roll down toward bight portion 18'b causing the portion 18' to rotate slightly clockwise increasing the tension on 18'r. The weight of the roller-hanger also causes portion 18'b to move downwardly until its horizontally cut-off terminal portion makes contact with bight portion 18b of the other feed-in spur rail 18 of work station WS2. When the roller-carrier has passed the cut-off end of 18'b as it rests on the adjacent bight portion 18b, the spring 18'r will tend to be restored to its compressed state thereby causing 18'b to rotate somewhat counterclockwise. Since the spring 18'r has its right end fastened to a higher point than its left end, in resuming its compressed state it will raise 18'b so that a garment coming in on the other in-feed line 18n can proceed to bight portion 18b without being impeded by 18'b.

Once the garment carriers 12 are on the bight portions 18b and past the anti-back up toggle (Fig. 2) 18r a garment can be easily removed therefrom manually by the worker or operator at that work station. As shown in Fig. 1, the worker may be seated at a sewing machine 23, for example. After performing the sewing or other

-11-

operation on a garment that is (optionally) removed from portion 12d, the worker replaces it in the clamp 12d of the same hanger which is positioned at the lower end of the elevator 18a (Figs. 1 and 2). The latter includes a movable belt or chain 18h that rotates about upper and lower pulleys 18j, the top pulley being driven by an associated air motor 18p. Motor 18p is coupled to a pneumatic energy source (not shown) via a valve that is also controlled by signals transmitted to the various valves via one of the quad boxes 24 from the central processing unit. The belt 18h carries a plurality (two or four) of pushers 18k, one of which will move to engage the roller-carrier 12 when the worker operates the pushbutton switch that has previously released one roller-carrier to the work station. Once engaged by a pusher 18k, the carrier is lifted by the belt to the intermediate position on the inclined outfeed rail such as shown in Fig. 2. Simultaneously, the retain-release subassembly 18c releases the next roller-hanger which thereupon rolls down past toggle 18r to the lower end of the elevator 18a. At the same time, any roller-hanger 12 which is in the intermediate or semi-uplifted position shown in Fig. 2, is moved even further upward over the elbow by a pusher 18k whereupon it rolls downward on until it is stopped by another release-retain device 18c in the position indicated in phantom lines in Fig. 2.

-12-

This latter release-retain device, when actuated by the proper pneumatic signals initiated by the central processing unit, via the quad box 24 associated with that work station, will release that hanger-carrier onto the lower rail 15 after the associated diversion arm 15a swings outwardly to meet the portion 18m.

The previous explanation of one typical garment transport system was to illustrate one environment of the present invention.

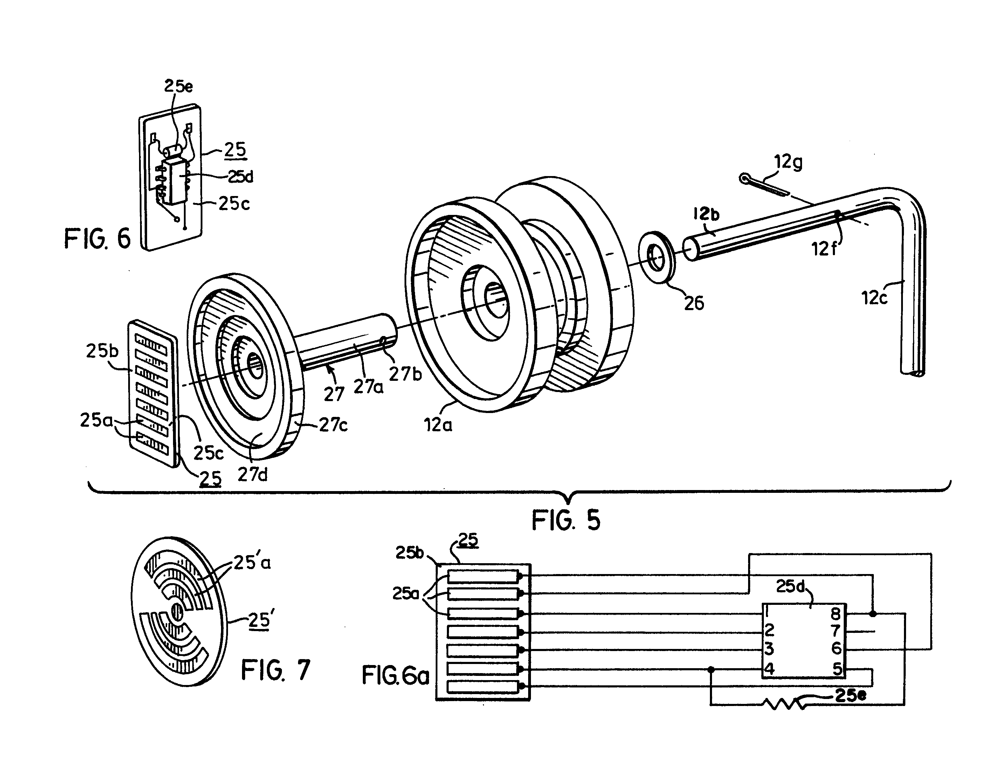

Present Invention - Figs. 5, 6, 6A and 7

In accordance with the present invention, a data write-in and read-out system is provided for monitoring the movement of the roller-hangers, the characteristics of the articles carried, the processing steps performed on those articles, and for the compilation of production data relating to said processing or for other purposes.

The invention comprises a data carrier means and means for sensing that data and utilizing it. The data carrier 25 is fixed on the left (as seen in Fig. 5) hub portion 27 of the roller 12a. It is fixed in the recessed portion 27d and there is a tubular horizontal shaft 27a which is fixed to (or formed integrally with) the right surface of the disc-like portion 27c. Formed toward the right end of the shaft 27a is an aperture 27b which, when the hub 27 is inserted through the roller 12a and the washer

-13-

26 fits over the bent-over portion 12b of the rod 12c, the aperture 27b is then aligned with the aperture 12f whereupon a retaining cotter pin 12g may be passed through the aligned apertures.

On the right side 25c of the data-carrier 25 there is an electrical circuit as shown in perspective in Fig. 6 and schematically in Fig. 6A. It comprises an integrated EAROM circuit 25d having a number of terminals, a resistor 25e and deposited wiring interconnecting those elements and metallic segments or traces 25a. It should be noted in the embodiment being explained, that there are seven segments 25a which correspond to seven sensing elements of the associated sensing means (Figs. 3, 4, 4a, 8) so that seven corresponding contacts may be made.

The seven segments 25a starting from the top, have applied to them via the sensing means the following signals or voltages: +5 DC, an optional utility signal, CHIP SELECT, CLOCK, DI, DO and ground. That is to say that the top sensing element 28a will be supplied with +5 volts DC, the second down will be supplied with the utility signal, if used, the third one down with a CHIP SELECT signal, and so on. These various voltages and signals (except the "DI" signal) are transmitted to and from the carrier sensing means including the module 28 which is itself coupled to the CPU. The data ("DI" signal) which is to be read from the EAROM 25d is sensed on the fifth segment down.

The data written into and out of the data carrier 25 via the segments dedicated to the "DI" and "DO" signals respectively may include or relate to the roller-hanger identifying number or address, style no., lot no., clothing part no., operation to be performed, numbers of the work stations through which that hanger passed, etc. The data is limited only by the storage capacity of the EAROM 25d being used.

Fig. 7 shows an alternate form that the traces on the data carrier may take. Instead of being generally rectangular, the alternate traces 25'a are arranged in generally concentric configuration on a disc-like insert 25' that fits into the recess 27d. As will be seen later, by adopting this configuration, if the rotary orientation of the section 27 is slightly off or non-uniform, the sensing pins 28a will nevertheless make respective contacts with proper ones of the traces as they did in the previous embodiment.

Sensing Means - Figs. 3, 4, 4A and 8

The other main part of the present invention is the means for energizing and sensing or writing data into the data carrier 26. As shown in Fig. 2, the retain release device 18c on the outfeed arm 18m has associated with it a sensing module 28. This sensing (or EAR) module 28 is connected to a pneumatic cylinder 29 having a rod 30 fastened to the rear side of the support board for module 28. There is also a microswitch 38 mounted on the bracket of the device 18c so that when a roller 12 trips the arm 38a of the microswitch and comes to rest against pin 18g, the roller is situated opposite sensing module 28. The switch closure causes generation of a pulse through pneumatic line 32 into the cylinder 29. This causes the piston and piston rod 30 therein to move the sensing element 28 axially outward so that the sensing elements 28a protruding therefrom will contact the segments 25a formed on the inner surface of the hub of the roller 12. The outward movement of module 28 is limited by two rearwardly-extending stabilizing and travel-limiting rods 31 that pass through apertures in the bracket that holds the other components of the release-retain subassembly 18c.

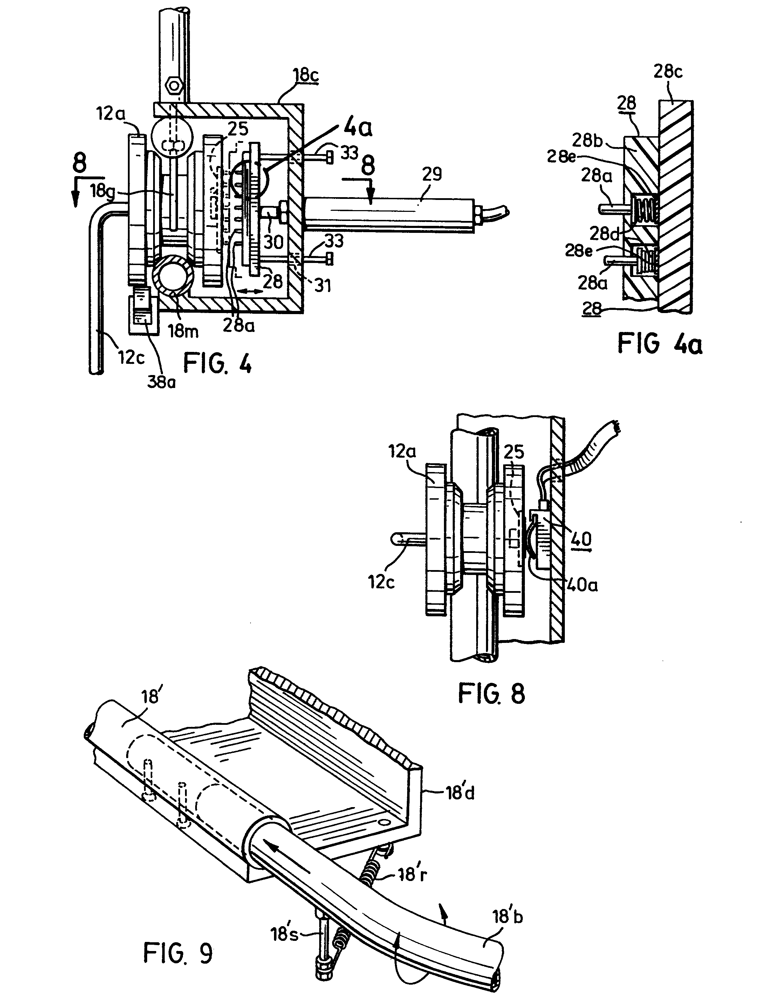

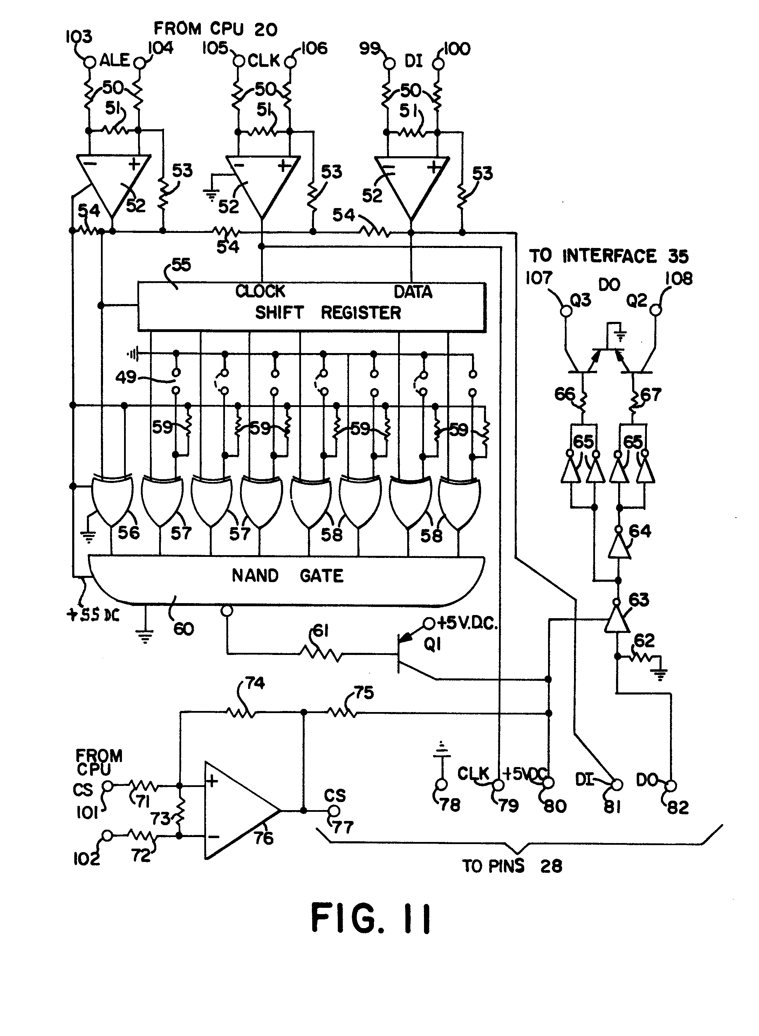

When the roller portion 12a is opposite the EAR module 28, the sensing elements or pins 28a of the EAR module make respective ohmic contacts with the previously-described metallic segments 25a. Those segments are electrically connected to an energizing source and a signal source via an interface module 35. Therefore, the pins 28a are respectively housed, as seen in Fig. 4a, in plastic or other non-conductive planar members 28b and 28c. Each pin 28a has an inner flat portion which makes conductive contact via a spring 28d with a metallic terminal 28e. The latter are coupled to corresponding connection points 77-82 on a printed circuit board which bears the circuit shown in Fig. 11.

-16-

The bringing into contact of the pins 28a with the metallic segments 25a of the data carrier (25a) enables the energization of the passive EAROM circuit 25d on the rear surface 25c of the data carrier 25 as well as the writing in or reading of data from the EAROM.

When the pins 28a have made contact with the respective metallic traces 25a on the data carrier 25, as seen in Fig. 6A, the uppermost and lowermost traces 25a have, when applied, between them +5 DC. This voltage energizes and activates the previously unpowered and passive carrier 25. With the activation of the carrier 25d, changeable data may be written into or read from it. How this is accomplished will next be described generally in connection with the EAR module which is also mounted on the board 28 (Fig. 3) and is electrically connected to the pins 28a.

Alternatively, instead of the pins 28a, a plurality of flexible, conductive strips 40a could be mounted on a board 40 attached to a support connected to the piston rod 30. These strips are slightly curved in an axial direction as shown in Fig. 8 to enable them to flex into intimate contact with the traces 25a when the module 28 is moved toward them. Each strip 40a would be connected to a different one of the connection points 77-82 (Fig. 11) through flat cable 34.

### EAR and EAROM Interconnections - Fig. 11

When the uppermost and lowermost traces or segments 25a of the carrier 25 are brought into contact with corresponding pins 28a, which are conductively linked to connection points 80 and 78 on Fig. 11, i.e., to +5V DC and to ground respectively, the EAROM is energized under control of the CPU.

The second highest trace 25a on carrier will be contacted by a pin that may be connected to a predetermined utility terminal (not shown) of the EAROM 25d.

The third highest trace 25a is connected to the pin which is conductively linked to the CHIP SELECT (CS) connecting point 77. Point 77 is connected to a circuit which goes back to the CPU via the interface module. The CPU generates a CS signal for activating particular subcircuits of the EAROM 25d when it is desired to write into or read out of the EAROM then in contact with the pins 28a. The CPU will send out the CS signal in a single-ended form to interface 35 where it is converted to a double-ended form signal applied to terminals 101 and 102 and then to amplifier 76 (Fig. 11).

The fourth trace 25a from the top may be connected to the pin which is conductively connected to the clock ("CLK") point 79. Point 79 is itself connected to the shift register 55 and to the output of the comparator 52 that is coupled to terminals 105 and 106. The latter

-18-

terminals are adapted to receive clock signals from the CPU via the interface 35. The latter will convert single-ended signals from the CPU to double ended signals produced by amplifiers 96 on board 68b (Fig. 10).

The fifth trace from the top will be connected by a pin that is connected to the DATA IN signals originating at the CPU as a single-ended signal. In the interface 35, that single-ended signal is converted to a double-ended one applied to the terminals 99 and 100. These signals may include, for example, coded portions which instruct the EARON whether it is to be written into or read from. Those signals also include the actual data to be written into the EARON. Those signals also may include portions which are intended to enable or disable predetermined parts of the EAROM.

The sixth trace is conductively connected to contact point 82 for conveying the read-out data back to the CPU. That DO data will appear at connecting point 82 which is connected to a driving circuit terminating in terminals 107 and 108 and thence through cable 34 to interface 35 on its way back, via cable 36, to the CPU.

The seventh trace is contacted by a pin which is conductively connected to connecting point 78 which is grounded.

EAR Module Operation

When the CPU is instructed to communicate with a particular one of the EAR modules to write in or read out data from a particular data carrier on a hanger, it will send ADDRESS LATCH ENABLE signals (ALE) via cable 36 to interface 35 and then via cable 34 to terminals 103 and 104. They will pass through a resistor network comprising a pair of resistors 50 which are coupled to two inputs of a comparator 52. A resistor 51 is shunted across the input of that amplifier-comparator. The comparator serves to enhance the noise immunity of the incoming ALE signals and its output is applied to one input of an EXCLUSIVE OR gate 56. The latter will produce an output signal applied to NAND gate 60 thereby enabling the latter. The ALE signals are also applied to the shift register 55.

At the same time, the CPU will send out CLOCK and DATA IN signals via an interface 35 which will respectively arrive at pairs of terminals 105, 106 and 99, 100. They also pass through similar resistance dividing networks 50 and 51 to the two pairs of respective inputs to the two comparators 52 associated therewith. The output of the clock comparator 52 is applied to a clock input terminal of the shift register and the output of the DI comparator 52 is applied to the data input of the shift register 55.

It is seen that the shift register will produce outputs applied to respective inputs of three EXCLUSIVE OR gates 57 and four inputs of EXCLUSIVE OR gates 58. The other inputs to these gates are connected to predetermined terminals of an array 49 of pairs of connecting points. Selected pairs may be coupled by jumpers (shown in broken lines) to a ground bus so that those inputs of gates 57 and 58 will receive a "0". The location of the jumpers determines the address of that particular EAR module. The array 49 may be alternatively a DIP switch.

If the signals applied from the shift register 55 to the inputs of gates 57 and 58 are such as to correspond to the address determined by the jumpers, the gates 57 and 58 will produce output signals that, when applied to the NAND gate 60, will cause the latter to produce an output signal. That output signal is applied via resistor 61 to the base of transistor Q1 rendering it conductive. The emitter of that transistor is connected to +5V DC. Current through Q1 will produce +5V DC at connecting point 80 that will energize the topmost pin 28a and its associated trace 25a. The pin 28a, being connected to connecting point 78 that is grounded, will, in conjunction with the voltage at connecting point 80, energize the EAROM.

At the same time, the CPU will produce a single ended signal called the CHIP SELECT signal (CS) that is converted to a double-ended signal in interface 35 and which appears at terminals 101 and 102. This signal will enable predetermined parts of the EAROM. It is applied via a resistance dividing network comprising resistors 71, 72 and 73 (the latter shunting the input) to the comparator 76. The output of the latter is applied to connecting point 77 that makes ohmic connection with the pin that will contact the CS trace on the data carrier.

Conduction of Q1 also effectively energizes inverting amplifier 63 so that any DO signals present at terminal 82 may be read, proceeding upward through the circuit connected to it and back to the CPU 20 via the interface module. If the coded DI signals from the CPU instruct the EAROM to be read, the pin making contact with the connecting point 82 will receive signals that are applied to inverting buffer amplifiers 63 and 64 in series. The output of buffer 63 is applied to a pair of inverting buffers 65 and thence via resistor 66 to the base of transistor Q3. The output of buffer 65 is applied to a pair of the same inverting amplifier 65 via resistor 67 to the base of transistor Q2. The emitters of both Q3 and Q2 are grounded and thus at their respective collector terminals 107 and 108 there will appear a double-ended DO signal that goes back via cable 34, interface 35 and cable 36 to the CPU for processing or display.

Interface Module 35 - Fig. 10

All signals to and from the CPU to the pins 28a travel by way of the interface module. In the particular system actually built, an Apple computer was the CPU 20. To adapt its circuits for use with the EAR module, the interface 35 was constructed as shown. It includes a card or board on which a number of components are mounted. This board is adapted to be connected to the so-called "Game I/O" plug of the Apple and its elements, after connection, are powered by the CPU. The board also is adapted to be coupled, via cable 34 to a number of connecting points on the EAR module.

The interface includes a socket 86 which is adapted to mate with a corresponding plug 85 that is coupled via a cable (not shown) to the Game I/O plug of the CPU. One terminal on the socket 86 is connected to three inputs of an AND/NAND gate 88. The two outputs of the gate 88 are respectively amplified by a pair of amplifiers 94 and applied as the bipolar CHIP SELECT signal to terminals 100 and 102 of the EAR module and are processed as previously explained in connection with Fig. 11.

Another connection of the socket 86 receives bipolar ALE signals from the CPU and applies them to three inputs of another AND/NAND gate 89. The latter's output signals are respectively amplified by amplifiers 95 producing a double-ended ALE signal that proceeds to connecting points 103, 104 in the EAR module via cable 34. Both of the subcircuits just described are part of a chip 68, one-half of which is numbered 68a, the other half being 68b.

A third connection of the socket 86 is to supply CLOCK signals to three inputs of another AND/NAND element 90. They are converted to bipolar signals which are applied to connecting points 105, 106 of the EAR module. A fourth connection from the socket 86 conveys DATA IN signals from the CPU to a fourth AND/NAND gate 91 whose bipolar output signals are amplified in amplifiers 97 which are coupled, via cable 34, to connecting points 99 and 100 in the EAR module.

- 23-

A fifth connection to the socket 86 conveys the DO signals received by the pins 28a, processed in the EAR module (Fig. 11) and appearing at connecting points 100, 101 of the EAR module back to the CPU. The signals are amplified in a receiver-driver 93 and fed to socket 86.

The board on which the circuit of Fig. 10 is disposed also is plugged into conducive connection with a power supply in the CPU.

The embodiment of the present invention pictured in the drawings and explained in the specification has included the following components whose type and values selected are quite satisfactory for the intended purpose of the present invention. Of course, other embodiments may use equivalent or different parts, but the invention is nevertheless to be defined by the claims herein.

| ITEM NO. | VALUE OR OTHER DESCRIPTION |
|---|---|
| 20 | APPLE Computer, Model 2+ |
| 25d | NSC9306 |
| 25e | |
| 50 | 100K |
| 51 | 10K |
| 52 | LN339 |
| 53 | 100K |
| 54 | 100K |
| 55 | 4094 |
| 56 | 74C89 |
| 57 | 74C89 |
| 58 | 74C89 |

| ITEM NO. | VALUE OR OTHER DESCRIPTION |
|----------|---------------------------|
| 59 | 100K |
| 60 | 4068 |
| 61 | 2200 |
| 62 | 100K |
| 63 | 74C04 |
| 64 | 74C04 |
| 65 | 74C04 |
| 66 | 2.2K |
| 67 | 2.2K |
| Q1 | 2N3906 |
| Q2 | 2N222 |
| Q3 | 2N222 |
| 71 | 100K |
| 72 | 100K |
| 73 | 10K |
| 74 | 560K |
| 75 | 2.2K |
| 76 | LN339 |
| 86 | 16 Pin Socket |
| 87 | 150K |
| 88, 89, 94, 95 | On 1/2 of 9614 |
| 90, 91, 96, 97 | On 1/2 of 9614 |
| 93 | 9615 |
| 98 | 150K |
| 99 | 150K |

Explanation of Program

The program below is written in BASIC source code.  The various parts of the program will be reviewed in terms of the main functions which are set forth next to the pertinent lines of the program.

-25-

Lines 100-190 - These initialize certain variables.

Lines 200-520 - These are object code definitions.

Lines 530-680 - These relate to initialization of the overall system.

Lines 682-1050 - The body of the program is contained here.  These lines relate to presentation of the menu.  The items on the menu involve a series of commands, i.e.:  ADDRESS, READ, READALL, WRITE, WRITEALL, ENABLE, DISABLE, REGISTER, CHIP, AUTOSCAN, and QUIT.

If any of these commands are typed in (see Lines 840, 860, 880, 900, 920, 940, 960, 980, and 1000), there is an appropriate subroutine which is commenced.  These commands respectively do the following:
1070-1180       ADDRESS - Given the address of a particular EAR module.
1190-1300       READ - Instructs the reading of the contents of one register in an EAROM module.  With this command, the operator must also specify a register number of that EAROM.
1310-1440       READALL - This instructs the reading of all of the registers of an EAROM.
1400-1600       CHECK FOR EAROM PRESENCE - This routine employs zero bit parity check techniques to verify that an EAROM is being sensed by the EAR module.  It provides in cooperation with the subroutine at 2700 for three successive readings

-26-

by the EAR of the traces 25a (Fig. 3). If no proper DO signals are received, a message to that effect is displayed at CPU which alerts the operator to the problem.

1610-1740    WRITE - This instructs writing in one designated register of a designated EAROM.

2160-2410    WRITEALL - This instructs the writing into all the registers of a designated EAROM.

1810-1880    ENABLE - This allows all data in an EAROM to be erased.

1890-1960    DISABLE - This prevents the erasure of any EAROM.

1970-2060    REGISTER - This instructs the erasure of data in a particular register and must be followed by typing in or a particular register desired.

2070-2150    ERASE CHIP - This erases all registers in a particular EAROM.

4000-    AUTOSCAN - This continuously scans all stations to see whether an EAROM is being sensed by an EAR module. If there is one such EAROM detected, this executes a READALL command (above) whereupon all registers of that EAROM are read.

3100-    QUIT - This command causes cessation of the menu presentation and commands and returns the computer to its operating system.

The other lines of the program concern various associated subroutines such as utility subroutines that are not in the menu, but are used in many of the routines. Instructions prefaced by "CALL" are machine language instructions.

```
JPR#0                    INAMAX Program
JLIST


100   REM   :EAR SYSTEM
101   REM
102   REM  /   E5   /
104   REM    / 840724 /
105   REM
110   HIMEM: 32767:  REM  OX7FFF
120   HOME :  CLEAR
130 D$ =  CHR$  (13)  +  CHR$ (4)
134   DIM MAPEARS%(80,2): REM  /(,
      1):EAR MODULE; (,2):EAROM PR
      ESENT/
136 NEAR = 80: REM  /NUMBER OF EA
      R MODULES/
140 SCS = 1: REM       /SECONDS/
150 MNTS= 1: REM       /MINUTES/
160 FALSE = 0
170 TRUE =  NOT FALSE
180 CHIP$ = "ER59256":ROMSIZE = 1
      6
190   REM ..........
200   REM  APPLE I/O ADDRESSES :
210   REM ..........
220 GAMEIO =  - 16296: REM  / ANN
      UNCIATORS AT OXC058 /
230 LOA = GAMEIO + 0: REM   /CHIP
      .SELECT.LOW/
240 HOA = GAMEIO + 1: REM   /CHI
      P.SELECT.HIGH /
250 L1A = GAMEIO + 2: REM  /ALE.
      LOW/
260 H1A = GAMEIO + 3: REM  /ALE.
      HI/
262 P0 = GAMEIO + 9: REM  /PBO:D
      0/
264 P1 = GAMEIO + 10: REM  /PB2:
      DO(+)/
266 P2 = GAMEIO + 11: REM  /PB2:
      DO(-)/
270   REM
280   REM CALL LOCATIONS IN RAM :
290   REM ..........
300 O = 25344: REM    / OX6300 OB
      J. CODE ORIGIN/
310 MINUTES = O + 0
320 SECS = O + 1: REM /SECONDS/
330 EAR = O + 2: REM  /EAR ADDRE
      SS /
340 KODE = O + 3: REM  /CODE-BYT
      E/
350 REG = O + 4: REM  /REGISTER A
      DDRESS
```

```
360 HBYTE = 0 + 5: REM      / DATA.
      H BYTE /
370 LBYTE = 0 + 6. REM       /DATA.L
      BYTE /
380 NADRSBITS = 0 + 7: REM      / NU
      MBER OF REG. ADRS BITS
390 LMOVE = 0 + 8: REM       / LEFT
      SHIFT COUNT /

      ARM START BYTE /
410 PARITYERR = 0 + 12: REM  / PA
      RITY ERROR FLAG/
420   REM .........
430   REM  CALL ADDRESSES :
440   REM .........
450 LOWALL = 0 + 147: REM  /CS.CL
      K,DI < - 0/
460 MARKERWR = 0 + 310: REM  /MAR
      K END OF ERASE AND WRITE
470 LSEAR = 0 + 183:REM    / LOAD
      & SEND EAR ADDRESS/
480 HLBYTERECV = 0 + 291: REM
      / RECEIVE DATA.H & DATA.L /
490 CODREGSND = 0 + 242: REM    /S
      END CODE & REGISTER ADDRESS
      /
500 SNDHLBYTE = 0 + 256: REM      /
      SEND DATA.H & DATA.L BYTES /

504 HCSPULSE = 0 + 317: REM   /CS:
      1,CLK:PULSE/
510   REM .........
520   REM  END OF OBJECT CODE DEFI
      NITIONS
530   REM .........
534   HTAB 10: PRINT "IRVING ARNOL
      D ASSOCIATES"
536   GOTO 550
540   HTAB 10: PRINT "MICRO APPLIC
      ATIONS"
550   HTAB 10: PRINT "COPY RIGHT :
      1984."
560   PRINT
570   GOSUB 3110: PRINT : REM  /PR
      INT HIMEM,LOMEM/
580   IF ( PEEK (WARMSTART)) = 170
      THEN 680
590   REM  /AUTO EAR.OBJ,A$6300,L$
      200/
BREAK
```

```
JLIST 590-

590   REM  /AUTO EAR.OBJ,A$6300,L$
      200/
600   PRINT D$"BLOAD AUTO EAR.OBJ"
610   POKE WARMSTART,170: REM  /WA
      RMSTART-BYTE  - OXAA /
620   POKE LMOVE,4: REM     4-BIT
      LEFT-SHIFT-ADRS.
630   POKE NADRSBITS,4: REM    /4-
      BIT REG. ADDRESS/
640   IF CHIP$ = "ER59256" THEN


      64X16 /
660   POKE LMOVE,2: REM     / LEFT
      SHIFT 2-BITS (6-BIT ADRS)/
670   POKE NADRSBITS,6: REM    / 6
      -BIT ADRS/
678   REM ........
680   REM  : LOOP BACK HERE ...
682   REM ........
690   CALL  - 1059: REM  BEEP
700   PRINT "PRESS ANY KEY TO CONT
      INUE   ":
710   GET A$
720   VTAB 2
730   POKE SECS,SCS: REM   /SECOND
      S./
740   POKE MINUTES,MNTS: REM  /MIN
      UTES /
750  WFIELD = 32: REM  FIELD WIDT
      H OF TOKENS IN COMMAND STRIN
      G.
760   GOSUB 2930: REM  / PRINT MEN
      U /
770   CALL  - 1059: REM  BEEP
780   FOR I = 1 TO 100: NEXT
790   CALL  - 1059
800   PRINT : PRINT
810   INPUT "ENTER COMMAND : ";INS
      T$
820   IF INST$ = "" THEN 860
830   GOSUB 2760: REM  TOKENS PARS
      E
840   IF CMDI$(1) < > "ADDRESS" THEN
      860
850   GOSUB 1070: GOTO 680
860   IF CMDI$(1) < > "READ"  THEN
      880
870   GOSUB 1190: GOTO 680
880   IF CMDI$(1) < > "READALL" THEN
      900
890   GOSUB 1310: GOTO 680
900   IF CMDI$(1) <  > "WRITE" THEN
      920
```

```
910    GOSUB 1610: GOTO 680
920    IF CMDI$ (1)<  > "WRITEALL" THEN
       940
930    GOSUB 2160: GOTO 680
940    IF CMDI$(1) <  > "ENABLE" THEN
       960
950    GOSUB 1810: GOTO 680
960    IF CMDI$ (1)<  > "DISABLE" THEN
       980
970    GOSUB 1890: GOTO 680
980    IF CMDI$(1) <  > "REGISTER" THEN
       1000
990    GOSUB 1970: GOTO 680
1000   IF CMDI$(1) <  > "CHIP" THEN
       1012
1010   GOSUB "=/=: GOTO 680
1012   IF CMDI$ (1)<  > "AUTOSCAN"
       THEN 1020
1014   GOSUB 4000: GOTO 680
1020   IF CMDI$(1) <  > "QUIT" THEN
       1040
1030   GOTO 3100: REM   END.


1060   REM ......................
       ..
1070   REM ..............
1080   REM  ADDRESS :
1090   REM ..............
1100   GOSUB 2690: REM      REPEAT C
OMMAND STRING.
1104   GOSUB 2410: REM      X=ADDRE
S OF BOARD.
1120   REM .......
1124   REM    ADDRESS ENTRY FROM A
UTO
1126   REM .......
1128   CALL LOWALL: REM / ALL OUTP
UTS:LOW/
1130 I = PEEK (H1A): REM   /ALE <—
HI/
1140 ADRS =X
1150   POKE EAR,ADRS: REM   / EAR
<-EAR ADDRESS:
1160   CALL LSEAR: REM  /LOAD&SEND
EAR ADDRESS/
1170 X = PEEK (L1A): REM   / ALE
<- LOW/
1180   RETURN : REM   END ADDRESS
BOARD.
1190   REM .............
1200   REM : READ REGISTER
1210   REM .............
1220   REM
```

```
1230  GOSUB 2690: REM    REPEAT CO
      MMAND STRING.
1240  POKE KODE.128: REM      READ
      -CODE: LEFT JUST'D NIBLE.
1242 J =  FRE (0): REM   /CLEAR ST
     RING AREA/
1246 BUF$ = "": REM     / NULL STRI
     NG /
1250  GOSUB 2410: REM   X=REG.NUM
1260  POKE REG,X: REM     / REG <-
      REG. ADRS/
1270 FIRST = X:LAST = X
1280  GOSUB 1450: REM    /READ X R
      EGISTER/
1290  PRINT : PRINT "REG #"X"  "BU
      F$: PRINT
1300  RETURN : REM     END READ RE
      GISTER.
1310  REM .............
1320  REM  READ-ALL :
1330  REM .............
1340  GOSUB 2690: REM    REPEAD C
      OMMAND STRING.
1350  POKE KODE,128: REM    READ
      -CODE:LEFT JUST'D NIBLE.
1360  PRINT
1370 FIRST = O:LAST = ROMSIZE - 1
     : REM / NUMBER OF 16-BIT REG
     ISTERS/
1376 J = FRE (0): REM /CLEAR STR
     ING AREA/
1380 BUF$ = "": REM / NULL STRIN
     G /
1390  GOSUB 1450: REM / READ CHI

     E THEN 1430
1410  PRINT : PRINT "*  PARITY ER
      ROR **": PRINT
1420  GOTO 1440
1430  PRINT : PRINT "EAR#:"ADRS"
      "BUF$: PRINT : PRINT
1440  RETURN : REM  / END : READA
      LL /
1450  REM ..............
1460  REM    READ CHIP :
1470  REM ..............
1480  FOR I = FIRST TO LAST
1490  POKE REG.I: REM      /REG <-
      REG. ADRS/
1500  FOR J = 1 TO 3
1510  POKE PARITYERR, FALSE
1512 ZZ = 3: FOR Z = 1 TO ZZ
1520  CALL CODREGSND: REM  /SEND
      CODE&REG.-ADRS./
```

```
1522   IF  PEEK (PO)    128 THEN 15
       30
1524   NEXT Z
1526   PRINT "LEADING ZERO-BIT ABS
       ENT!"
1528   PRINT "REG# "I" EAR# "ADRS"
1529   PRINT "READALL IS ABORTED!"
       : GOTO 1590
1530   CALL HLBYTERECV: REM  / REC
       EIVE DATA.H&DATA.L/
1540   IF PEEK (PARITYERR) = FALS
       E THEN 1570
1550   NEXT J
1560   IF PEEK (PARITYERR) = TRUE
       THEN 1590
1570 H = PEEK (HBYTE):L = PEEK
       (LBYTE)
1572 HH$ = CHR$ (H):LL$ = CHR$
       (L)
1574 BUF$ = BUF$ + HH$ + LL$
1576   REM /PRINT "I "I" H "H" H$
       "H$" L "L" L$ "L$"
1580 NEXT I
1590   CALL LOWALL: REM  / CS, CLK,
       DI <- LOW/
1600   RETURN : REM  / END : READ
       CHIP /
1610   REM ..............
1620   REM WRITE REGISTER
1630   REM ...............
1640   GOSUB 2690: REM  REPEAT COM
       MAND.
1650   REM
1652   GOSUB 1850: REM  /ENABLE'ER
       ASE/
1656   POKE KODE,64: REM   "WRITE
       "-CODE(LEFT JUST'D).
1660   GOSUB 2410: REM   GET X=REG
       .ADRS.
1670   POKE REG,X: REM  /REG <- RE
       G. ADRS/
1680   GOSUB 2480: REM  /H&L-BYTE
       <-DATA-H&L/
1690   CALL CODREGSND: REM   /SEND


       H&L-BYTE DATA/
1710   GOSUB 1730: REM      MARK-E
       ND -OF-ERASE&WRITE.
1714   GOSUB 1930: REM /DISABLE ER
       ASE/
1720   RETURN : REM   END WRITE RE
       GSTER.
1730   REM ...............
1740   REM  MARK-END-ERASE-WRITE:
```

```
1750  REM ....................
1760  CALL LOWALL: REM   /CS,CLK,D
      I:LOW/
1770  FOR I = 1 TO 15: NEXT : REM
      /15 MS. DELAY/
1780  REM   CALL HCSPULSE: REM   /C
      S:1,CLK:PULSE/
1790  REM   CALL LOWALL: REM    /CS
      ,CLK,DI:LOW/
1800  RETURN : REM   END MARK.END,
      E/W.
1810  REM ..............
1820  REM   ENABLE ERASE
1830  REM ..............
1840  GOSUB 2690: REM    REPEAT CO
      MMAND.
1850  CALL LOWALL
1856  POKE KODE,48: REM    / "ENA
      BLE-CODE(LEFT JUST'D)/
1860  POKE REG,O: REM  /REG <- RE
      G. ADRS/
1870  CALL CODREGSND: REM  / SEND
      CODE,&REG ADRS/
1880  RETURN : REM    END ERASE E
      NABLE.
1890  REM ..............
1900  REM   DISABLE ERASE
1910  REM ..............
1920  GOSUB 2690: REM    REPEAT
      COMMAND.
1930  POKE KODE,OO: REM  / "DISA
      BLE  CODE(LEFT JUST'D)/
1940  POKE REG,O: REM   / REG <-
      REG. ADRS/
1950  CALL CODREGSND: REM    /SEN
      D CODE,&REG ADRS/
1960  RETURN : REM   END ERASE DI
      SABLE.
1970  REM ..............
1980  REM  :ERASE REGISTER:
1990  REM ..............
2000  GOSUB 2690:REM   REPEAT C
      OMMAND STRING
2010  POKE KODE, 192: REM   ERAS
      E-REGISTER CODE;LEFT JUST D
      NIBLE
2020  GOSUB 2410: REM    X=REG.NU
      M
2030  POKE REG,X: REM  /REG <-RE
      G. ADRS/
2040  CALL CODREGSND: REM    /SE
      ND CODE,&REG ADRS/
2050  GOSUB 1730: REM    MARK-END
      -OF-ERASE&WRITE.
2060  RETURN : REM  END ERASE RE
      GISTER
```

34

```
2080   REM
2090   REM ............
2100   GOSUB 2690: REM    REPEAT C
       OMMAND STRING.
2110   REM
2112   CALL LOWALL: GOSUB 1850: REM
       /ENABLE EW/
2116   POKE KODE,32: REM   / ERASE
       -CHIPCODE;LEFT JUST'D NISL/
2120   POKE REG,O: REM   /REG <- R
       EG. ADRS/
2130   CALL CODREGSND: REM       /S
       END CODE,&REG ADRS/
2140   GOSUB 1730: REM       MARK-E
       ND -OF-ERASE&WRITE.
2144   GOSUB 1930: REM /DISABLE EW
       /
2150   RETURN : REM   END CHIP ERAS
       E.
2160   REM ............
2170   REM WRITEALL :
2180   REM ............
2190   GOSUB 2690: REM   REPEAT CO
       MMAND.
2200   PRINT "ARE YOU SURE ? (Y/N)
       ";
2210   GET A$
2220   IF A$ = "Y" THEN 2270
2230   GOTO 2400: REM RETURN.
2240   POKE 32,0: REM CURSR LEFT
       JUSTD.
2250   CALL  - 922: REM   CLEAR TO
       END OF LINE.
2260   GOTO 2200
2270   GOSUB 2110: REM  /  ERASE CH
       IF(NO REPEAT OF CMD)/
2274   GOSUB 1850: REM  / ENABLE EW
       /
2280   POKE KODE, 64: REM  / "WRITE
       "CODE(LEFT JUST'D)/
2290 HEOS = FALSE:LEOS = FALSE
2300   FOR J = 0 TO ROMSIZE - 1
2310   IF LEOS THEN 2394: REM    /
       RETURN/
2320   POKE REG.J: REM     /REG <-
       REG. ADRS/
2330   I = J
2340   GOSUB 2560: REM  /H&L-BYTE
       <-DATA-H&L/
2350   IF HEOS THEN 2394: REM /RET
       URN/
2360   CALL CODREGSND: REM       /S
       END CODE,&REG ADRS/
```

0220380

```
2370  CALL SNDHLBYTE: REM     /SEN
      D H$L-BYTE DATA/
2380  GOSUB 1730: REM     Mark-E
      ND -OF-ERASE&WRITE
2390  NEXT J
2394  GOSUB 1930: REM  /DISABLE E
      W/
2400  RETURN : REM  END WRITEALL.
2410  REM : ................
2420  REM : REGISTER NUMBER

2450  IF X >   = 0 OR  X= < 16 THEN
      2470
2460  PRINT "NUMBER OUT OF RANGE
      ! "
2470  RETURN
2480  REM .............
2490  REM   DATA H&L FROM  CMDI$(3
      ):
2500  REM .............
2510  DH$ =  MID$ (CMDI$(3).1.1)
2520  POKE HBYTE, ASC (DH$): REM
      /HBYTE  <- DATA-H/
2530  DL$ =  MID$ (CMDI$(3),2,1)
2540  POKE LBYTE, ASC (DL$): REM
      /LBYTE  <-DATA-L/
2550  RETURN
2560  REM .............
2570  REM   DATA H&L INDEXED WITH
      (I)
2580  REM   FROM CMDI$(2) :
2590  REM ..............
2600  DH$ = MID$ (CMDI$(2), I * 2 +
      1,1)
2610  IF DH$ < > "" THEN 2630
2620  HEOS = TRUE: GOTO 2680
2630  POKE HBYTE, ASC (DH$): REM
      /HBYTE <-DATA-H/
2640  DL$ = MID$ (CMDI$(2),I * " +
      2,1)
2650  IF DL$ < > "" THEN 2670
2660  LEOS = TRUE: GOTO 2680
2670  POKE LBYTE, ASC (DL$): REM
      /LBYTE  <-DATA-L/
2680  RETURN : REM  END DATA H&L
      INDEXD.
2690  REM ...........
2700  REM : REPEAT COMMAND STRIN
      G
2710  REM ...........
2720  PRINT ;
2730  FOR I = 1 TO 3
2740  PRINT CMDS$(I)" ";: NEXT : PRINT
```

```
2750   RETURN
2760   REM  : TOKENS FROM COMMAND
       LINE:
2770   FOR I = 1 TO 3:CMDI$(1) = "
       ": NEXT
2780   PSN = 1:LPSN = 1:OUTS$ = "**
       ":I = 1
2790   IF OUTS$ = "" OR I >  = 4 THEN
       2860
2800   GOSUB 2870: REM  NEXT SPACE
2810   OUTS$ = MID$ (INST$, LPSN, PS
       N - LPSN - 1)
2820   IF OUTS$ = " "OR OUTS$ = "
       "GOTO 2840
2830   CMDI$(I) = OUTS$:I = I + 1
2840   LPSN = PSN:PSN = PSN + 1
2850   GOTO 2790
2860   RETURN
2870   REM : FIND NEXT SPACE
2880   CX$ = "**"


       / SYSTEM CRASH!/
4380   REM /PRESENT:1)  EAR MODULE/
4400   REM          ")  EAROM
4420   IF MAPEARS%(II,1) THEN 4800
       : REM  /NEXT II: EAROM AT II
       ALREADY READ./
4440   GOSUB 1350: REM   /READALL
       REGISTERS/
4460   MAPEARS%(II,1) = 1: REM
       /EAROM HAS BEEN READ/
4480   GOTO 4800: REM  /NEXT II/
4500   REM   /PRESENT:EAR MODULE/
4510   IF B2 > 127 THEN 4700: REM
       /EAR & EAROM BOTH ABSENT/
4520   MAPEARS%(II.0) = 1: REM /EAR
       PRESENT/
4540   MAPEARS%(II,1) = 0: REM   /C
       LEAR FLAG TO READ EAROM WHEN
       PRESENT/
```

```
4560   GOTO 4800: REM /NEXT II/
4700   REM /BOTH EAR & EAROM ARE
       ABSENT/
4720 MAPEARS%(II,0) = 0: REM   /EA
     R ABSENT/
4740 MAPEARS%(II,1) = 0: REM    /E
     AROM ABSENT/
4800   REM
4820 K = PEEK ( - 16384): REM
       /KEYBOARD/
4840   IF K < 128 THEN 4880: REM
           /NO KEY ACTIVE/
4860   IF K = 155 THEN RETURN : REM
         /<ESC> TERMINATES LOOP/
4880   NEXT II
4900   REM
4920   GOTO 4200: REM    /LOOP FOR
       EVER/
4940   REM
5000   REM ............
5020   REM  SYSTEM CRASH
5030   REM ............
5040   PRINT
5060   PRINT "*** SYSTEM HARDWARE
       MULFUNCTION ***": PRINT
5080   PRINT "     SHUT DOWN SYSTEM
       FOR TOUBLE SHOOTING! ....":
       PRINT
5100   END
5200   REM LIST MAPEARS ARRAY :
5220   FOR I = 0 TO NEAR
5240   FOR J = 0 TO 1
5260   PRINT "M("I","J") "MAPEARS%
       (I,J): NEXT : NEXT
5280   END
6000   REM / *** END : E5 +++
```

WHAT IS CLAIMED IS:

1.  A data storage and retrieving system, comprising:

(a)  a normally unenergized and alterable passive data carrier adapted to be associated with a predetermined object or objects and constructed to permit data to be written into or read therefrom when energized, and

(b)  means normally independent of said carrier and having at least one part arranged to be in proximity thereto, said means including means for energizing said carrier and also including means for writing in or reading out data stored in said carrier when said carrier is energized.

2.  A system according to claim 1 wherein said data is related to said objects.

3.  A system according to claim 1 wherein said energizing means energizes said carrier for selected time periods.

4.  A system according to claim 1 wherein said (b) means makes contact with said carrier when said energization and said writing or reading are effected.

5.  A system according to claim 4 wherein said energization and writing and reading are effected electrically.

6. A system according to claim 1 wherein said carrier is brought to rest near said part of said (b) means and the latter is moved into signal-transfer relation to said carrier to effect energization thereof or to effect writing in or reading out of data therefrom.

7. A system according to claim 6 wherein said signal-transfer relation is ohmic contact and wherein said energization, writing and reading are effected electrically.

8. A system according to claim 1 wherein said system is a system for transporting articles from one station to another, wherein said data carrier is associated with a carrier for at least one of said articles, wherein said carrier for said article is dispatched to circulate between a plurality of said stations, and wherein said part of said (b) means is fixedly disposed at least at one of said stations.

9. A system according to claim 8 wherein said (b) means includes a central processing unit coupled to said part of said (b) means and further includes sensing means adapted to make contact with said data carrier as said carrier for said article is transported into predetermined ones of said stations whereupon said central processing unit transmits electrical signals via said sensing means to said data carrier which energizes the latter and permits said central processing unit to write into or read from said data carrier as determined by said central processing unit.

10. A system according to claim 9 wherein said sensing means comprises a plurality of electrically conductive members and wherein said data carrier includes a plurality of conductive traces adapted to be engaged by said conductive members.

11. A system according to claim 10 wherein said conductive members comprise a plurality of resilient conductive strips.

12. A system according to claim 10 wherein said conductive members comprise a plurality of pins.

13. A system according to claim 9 wherein said sensing means are disposed at points where said carriers for said articles come to rest and said data carrier is disposed opposite said sensing means and further wherein means are provided to cause said sensing means to move into contact with said data carrier.

0220380

EPAB-34017.4

FIG. 1

0220380

EPAB-34017.4

FIG. 2

0220380

EPAB-34017.4

TO CPU 20

FIG. 3

EPAB-34017.4

FIG. 4

FIG 4a

FIG. 8

FIG. 9

FIG. 6

FIG. 5

FIG. 7

FIG. 6a

FIG. 10

FIG. 11